# EUROPEAN PATENT APPLICATION

(11) **EP 4 432 436 A1**
(43) Date of publication of application: **18.09.2024**
(21) Application number: 22893091.3
(22) Date of filing: 28.10.2022
(51) Int. Cl.: H01M 50/209, H01M 50/242, H01M 50/24

(54) **RECHARGEABLE BATTERY MODULE**

(30) Priority: 11.11.2021 KR 20210154924
(71) Applicant: Samsung SDI Co., Ltd., Yongin-si, Gyeonggi-do 17084 (KR)
(72) Inventor: KIM, Myungchul, Yongin-si, Gyeonggi-do 17084 (KR); CHOI, Youngho, Yongin-si, Gyeonggi-do 17084 (KR)
(74) Representative: Gulde & Partner
(86) International application number: PCT/KR2022/016760
(87) International publication number: WO 2023/085669

(57) **Abstract**

An embodiment provides a rechargeable battery module comprising a stack including a plurality of battery cells arranged along a first direction, a plurality of insulating assemblies positioned between the battery cells, a side plate positioned at a first end portion of the stack along a first direction and a second end portion opposite to the first end portion to support the unit cells, and an end plate positioned at a third end portion of the stack and a fourth end portion opposite to the third end portion along a second direction crossing the first direction to support the unit cells. The stack is positioned in a space surrounded by the side plate and the end plate, and a distance between at least the outermost battery cell disposed on the periphery of the stack and the battery cell adjacent to the outermost battery cell among the battery cells is at least greater than a distance between battery cells positioned adjacent to the center of the stack.

## Description

### TECHNICAL FIELD

The present disclosure relates to a rechargeable battery module including a plurality of battery cells.

### BACKGROUND ART

A rechargeable battery may be repeatedly charged and discharged, unlike a primary battery. A low-capacity rechargeable battery is used for small portable electronic device such as a mobile phone, a notebook computer, and a camcorder, and a large-capacity rechargeable battery is used as a power supply for driving a motor such as for a hybrid vehicle and an electric vehicle. Rechargeable batteries may be used as single cells in small electronic devices, or may be used as a module structure in which a plurality of cells are electrically connected, such as for driving a motor, or a pack structure in which a plurality of modules are electrically connected.

For example, a rechargeable battery module may be configured to cover and secure a stack of a plurality of battery cells aligned along a direction with a side plate and an end plate. Herein, the battery module is required to be configured such that a shape thereof is not deformed due to swelling of the battery cells.

### DISCLOSURE

### TECHNICAL PROBLEM

An embodiment of the present disclosure attempts to provide a rechargeable battery module capable of reducing module deformation due to a swelling phenomenon of battery cells.

### TECHNICAL SOLUTION

A rechargeable battery module according to a first aspect of the present disclosure includes a stack including a plurality of battery cells arranged along a first direction, a plurality of insulating assemblies positioned between the battery cells, a side plate positioned at a first end portion of the stack along the first direction and a second end portion opposite to the first end portion to support the unit cells, and an end plate positioned at a third end portion of the stack and a fourth end portion opposite to the third end portion along a second direction crossing the first direction to support the unit cells. The stack may be positioned in a space surrounded by the side plate and the end plate, and a distance between at least the outermost battery cell disposed on the periphery of the stack and the battery cell adjacent to the outermost battery cell among the battery cells may be at least greater than a distance between battery cells positioned adjacent to the center of the stack.

A distance between remaining battery cells may be the same except for the distance between the outermost battery cell and the battery cells neighboring the outermost battery cell.

The distance between the battery cells may gradually increase from a center of the stack to a periphery of the stack.

If a number of distances equal to the distance between the outermost battery cell positioned at the periphery of the stack and the battery cell adjacent to the outermost battery cell is n, and a number of distances equal to the distance between battery cells positioned adjacent to the center of the stack is m among distances between the battery cells, n may be greater than m.

A thickness of an insulating assembly positioned between at least the outermost battery cell positioned on the periphery of the stack and a battery cell adjacent to the outermost battery cell may be at least greater than a thickness of an insulation assembly positioned between battery cells positioned adjacent to the center of the stack among the insulating assemblies.

The battery cell may be a prismatic battery cell.

The battery cell may include a case including opposing wide surfaces and opposing narrow surfaces perpendicular to the wide surfaces, and the insulation assembly may include an insulating sheet configured to have a size substantially equal to the size of the wide surface, and an adhesive tape positioned between the insulating sheet and the wide surface to attach the insulating sheet to the case.

The adhesive tape may be separated from the insulating sheet with an air layer provided therebetween.

The rechargeable battery module may further include a fixing assembly that is connected to and fixed to the side plate and the end plate, respectively.

A rechargeable battery module according to a second aspect of the present disclosure includes stack including a plurality of battery cells arranged along a first direction, a plurality of insulating assemblies positioned between the battery cells, a side plate positioned at a first end portion of the stack along a first direction and a second end portion opposite to the first end portion to support the unit cells, an end plate positioned at a third end portion of the stack and a fourth end portion opposite to the third end portion along a second direction crossing the first direction to support the unit cells, and a fixed assembly connected and fixed to the side plate and the end plate, respectively. The stack may be positioned in a space surrounded by the side plate and the end plate, a distance between at least the outermost battery cell disposed on the periphery of the stack and the battery cell adjacent to the outermost battery cell among the battery cells may be at least greater than a distance between battery cells positioned adjacent to the center of the stack, and a thickness of an insulating assembly positioned between at least the outermost battery cell positioned on the periphery of the stack and a battery cell adjacent to the outermost battery cell may be at least greater than a thickness of an insulation assembly positioned between battery cells positioned adjacent to the center of the stack among the insulating assemblies.

### ADVANTAGEOUS EFFECTS

In an embodiment of the present disclosure, if swelling of the battery cells occurs in the rechargeable battery module, module deformation due to the swelling may be minimized (or prevented) by a distance between battery cells positioned at a periphery of the stack.

Minimizing this module variation can have advantages in module manufacturing production (e.g., avoiding component inventory) because a size of component parts (e.g., side plate and end plate) of a battery module may not change (e.g., expand) according to a swelling phenomenon of the battery cell.

### BRIEF DESCRIPTION OF THE DRAWINGS

The drawings are intended to be used as references for describing the embodiments of the present invention, and the accompanying drawings should not be construed as limiting the technical spirit of the present disclosure.
FIG. 1 illustrates a perspective view of a rechargeable battery module according to an embodiment of the present disclosure.
FIG. 2 illustrates a perspective view of a battery cell according to an embodiment of the present disclosure.
FIG. 3 illustrates a cross-sectional view taken along a line III-III of FIG. 2.
FIG. 4 illustrates a top plan view for describing an arrangement state of battery cells of a stack in a rechargeable battery module according to an embodiment of the present disclosure.
FIG. 5 illustrates a perspective view showing an insulating assembly according to an embodiment of the present disclosure.
FIG. 6 illustrates an insulating assembly positioned between an outermost battery cell and neighboring battery cells thereof in a rechargeable battery module according to an embodiment of the present disclosure.
FIG. 7 illustrates an insulating assembly disposed between battery cells excluding an outermost battery cell in a rechargeable battery module according to an embodiment of the present disclosure.

### MODE FOR INVENTION

In the following detailed description, only certain embodiments of the present disclosure have been shown and described, simply by way of illustration.

As those skilled in the art would realize, the described embodiments may be modified in various different ways, all without departing from the spirit or scope of the present disclosure. Accordingly, the drawings and description are to be regarded as illustrative in nature and not restrictive. Like reference numerals designate like elements throughout the specification.

In this specification, redundant descriptions for the same component will be omitted.

In this specification, it is to be understood that when one component is referred to as being "connected" or "coupled" to another component, it may be connected or coupled directly to the other component or may be connected or coupled to the other component with a further component intervening therebetween. In this specification, it is to be understood that when one component is referred to as being "connected" or "coupled directly" to another component, it may be connected to or coupled to the other component without being connected to a component intervening therebetween.

It is also to be understood that the terminology used herein is only for the purpose of describing particular embodiments, and is not intended to be limiting of the invention.

Singular expressions used herein include plural expressions unless they have definitely opposite meanings in the context.

It will be further understood that terms "comprise" or "have" used in the present specification specifies the presence of stated features, numerals, steps, operations, components, parts, or a combination thereof, but do not preclude the presence or addition of one or more other features, numerals, steps, operations, components, parts, or a combination thereof.

In addition, as used herein, the term "and/or" includes any plurality of combinations of items or any of a plurality of listed items. In this specification, "A or B" may include "A", "B", or "A and B".

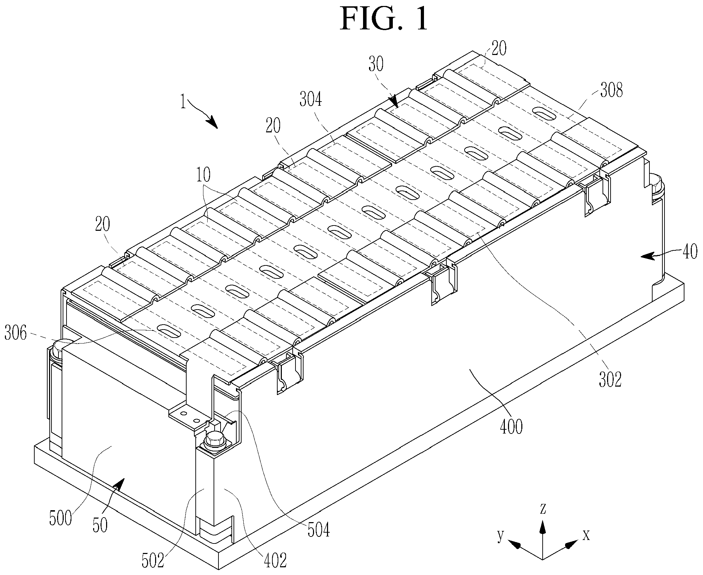

FIG. 1 illustrates a perspective view of a rechargeable battery module according to an embodiment of the present disclosure. Referring to FIG. 1, the rechargeable battery module 1 of the embodiment includes a stack 30 including a plurality of battery cells 20 arranged along a first direction x and connected to a bus bar 10. The stack 30 is accommodated in a space created by a side plate 40 and an end plate 50 positioned to surround an outer perimeter of the stack 30.

In the present embodiment, the battery cells 20 of the stack 30 may be supported by the side plate 40 and the end plate 50, and may be secured by a fixing assembly 60 that interconnects the side plate 40 and the end plate 50.

In the present embodiment, the battery cells 20 are, e.g., lithium ion prismatic batteries and are arranged adjacent to each other in the first direction x, and are electrically and mechanically connected to each other to form the stack 30. For example, the bus bar 10 is disposed above the rechargeable battery module to electrically connect the battery cells 20. The battery cell may also be an all-solid-state battery.

In the present embodiment, a total of 12 (twelve) battery cells 20 are provided, the bus bar 10 connects four neighboring battery cells 20 in parallel, and the four battery cells 20 connected in parallel and other four neighboring battery cells 20 are connected in series.

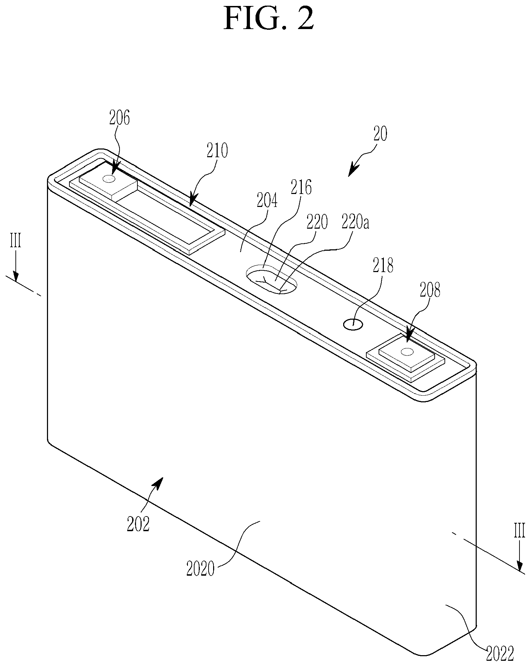

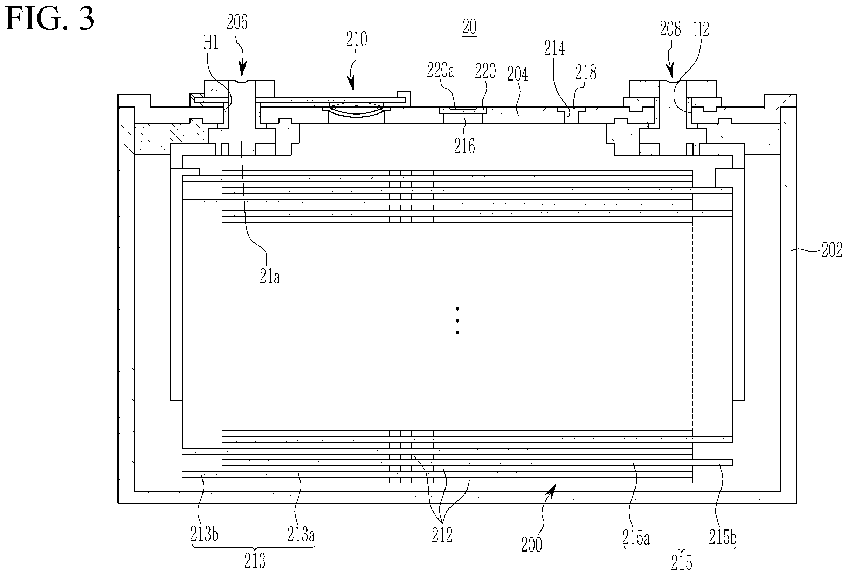

FIG. 2 illustrates a perspective view of battery cells applied to FIG. 1, and FIG. 3 illustrates a cross-sectional view taken along a line III-III of FIG. 2.

Referring to FIGS. 2 and 3, the battery cell 20 is formed as a rechargeable battery that charges and discharges a current.

The battery cell 20 may include an electrode assembly 200, a case 202 housing the electrode assembly 200, a cap plate 204 coupled to an opening of the case 202, a first electrode terminal (hereinafter referred to as "negative terminal") 206 installed on the cap plate 204, a second electrode terminal (hereinafter referred to as "positive terminal") 208, and an external short circuit portion 210 provided at a side of the negative terminal 206.

The electrode assembly 200 may be formed by positioning a first electrode (hereinafter referred to as "negative electrode") 213 and a second electrode (hereinafter referred to as "positive electrode") 215 at opposite sides of a separator 212, which is an insulator, and rolling up the negative electrode 213, the separator 212, and the positive electrode 215 into a jelly roll state.

The negative electrode 213 and the positive electrode 215 may respectively include coated portions 213a and 215a in which an active material is applied to a current collector of a metal plate, and uncoated areas 213b, 215b formed from the current collector exposed by not applying an active material.

The uncoated portion 213b of the negative electrode 213 is positioned at a first end of the negative electrode 213 along the wound negative electrode 213. The uncoated portion 215b of the positive electrode 215 is positioned at a first end of the positive electrode 215 along the wound positive electrode 215. The uncoated portions 213b and 215b may be positioned at positive ends of the electrode assembly 200, respectively.

The case 202 may be formed as a roughly rectangular parallelepiped to set a space for accommodating the electrode assembly 200 and an electrolyte therein, and an opening connecting exterior and interior spaces is formed at a first side of the rectangular parallelepiped. That is, the case 202 may have a shape including opposing wide surfaces 2020 and opposing narrow surfaces 2022 positioned perpendicular to the wide surfaces 2020. The opening allows the electrode assembly 200 to be inserted into the case 202.

The cap plate 204 is installed in the opening of the case 202 to seal the opening of the case 202. For example, the case 202 and the cap plate 204 may be made of aluminum to be welded to each other.

In addition, the cap plate 204 includes an electrolyte injection port 214, a vent hole 216, and terminal holes H1 and H2. The electrolyte injection port 214 allows the electrolyte to be injected into the case 202 after coupling the cap plate 204 to the case 202. After injecting the electrolyte solution, the electrolyte injection port 214 may be sealed with a sealing stopper 218.

The vent hole 216 is sealed with a vent plate 220 to discharge an internal pressure of the battery cell 20. If the internal pressure of the battery cell 20 reaches a predetermined pressure, the vent plate 220 is cut to open the vent hole 216. The vent plate 220 includes a notch 220a for guiding an incision thereof.

The negative terminal 206 and the positive terminal 208 are installed in the terminal holes H1 and H2 of the cap plate 204, and are electrically connected to the electrode assembly 200. That is, the negative terminal 206 is electrically connected to the negative electrode 13 of the electrode assembly 200, and the positive terminal 208 is electrically connected to the positive electrode 215 of the electrode assembly 200. Accordingly, the electrode assembly 200 is pulled out of the case 202 through the negative terminal 206 and the positive terminal 208.

Referring again to FIG. 1, in the present embodiment, side plates 40 are provided as a pair to be respectively positioned adjacent to a first end portion 302 and a second end portion 304 of the stack 30 along the first direction x, and the end plates 50 are also provided as a pair to be positioned adjacent to a third end portion 306 and a fourth end portion 308 of the stack 30 along a second direction y that intersects the first direction x.

In the present disclosure, the side plate 40 and the end plate 50 do not necessarily have to be provided as a pair and positioned opposite to each other as described above. For example, the end plate may be integrally connected to a single end portion or opposite end portions of one side plate, or may be provided to include a structure in which side plates are integrally connected to opposite end portions of one end plate.

In the present embodiment, the side plate 40 includes a body 400 made of a metal (e.g., stainless steel) and having an approximately rectangular shape. This body 400 is disposed along the first direction x, e.g., adjacent to a narrow side of a case of a plurality of battery cells 20.

In addition, the side plate 40 includes a coupling portion 402 that extends from opposite ends (left and right ends with respect to FIG. 1) of the body 400 to be coupled to the fixing assembly 60. The end plate 50 also includes a body 500 that is substantially rectangular and positioned adjacent to a wide side surface of a case of, e.g., outermost battery cell among the battery cells 20 along the second direction y. A coupling portion 502 coupled to the fixing assembly 60 extends in a protruding shape at opposite end portions (left and right ends with respect to FIG. 1) of the body 500 of the end plate 50.

In addition, the end plate 50 includes a support portion 504 connected to the body 500 and supporting the outermost battery cell. In the present embodiment, the body 500 of the end plate 50 may be made of a metal (e.g., stainless steel), and the support portion 504 may be made of an electrical insulating material (e.g., plastic).

The fixing assembly 60 connecting the side plate 40 and the end plate 50 may be positioned at four corners of the rechargeable battery module 1.

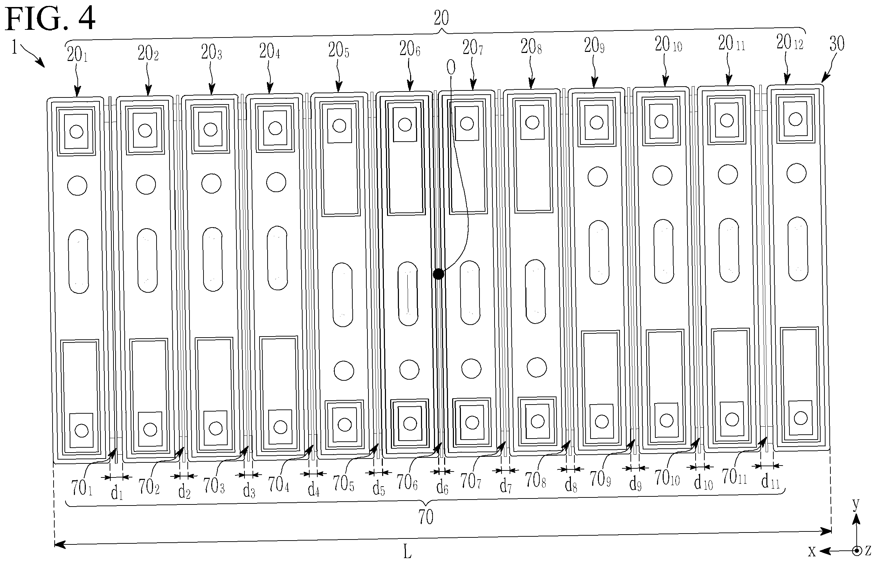

FIG. 4 illustrates a top plan view for describing an arrangement state of the battery cells 20 of the stack 30 in the rechargeable battery module 1 according to an embodiment of the present disclosure. For better understanding and ease of description, in FIG. 4, the side plate and end plate are not shown, but battery cells 20, 20₁, 20₂, 20₃, 20₄, 20₅, 20₆, 20₇, 20₈, 20₉, 20₁₀, 20₁₁, and 20₁₂ and insulating assemblies 70, 70₁, 70₂, 70s, 70₄, 70₅, 70₆, 70₇, 70₈, 70₉, 70₁₀, and 70₁₁ positioned between the battery cells 20 are shown.

In the present embodiment, a total of 12 (twelve) battery cells 20, from the first battery cell 20₁ to the twelfth battery cell 20₁₂ may be provided to be positioned in a row along the first direction x within a space defined by (or surrounded by) a combination of the side plate 40 and the end plate 50 illustrated in FIG. 1.

If the battery cells 20 are lined up, distances d₁, d₂, d₃, d₄, d₅, d₆, d₇, d₈, d₉, d₁₀, and d₁₁ are set between neighboring battery cells 20₁, 20₂, 20s, 20₄, 20s, 20₆, 20₇, 20₈, 20₉, 20₁₀, 20₁₁, and 20₁₂. For example, the outermost battery cells 20₁ and 20₁₂ positioned at the periphery of the stack 30, that is, at opposite ends of the stack 30, are positioned with the first distance d₁ and the eleventh distance d₁₁ having a first size between the neighboring second battery cells 20₂ and the eleventh battery cells 20n, respectively.

On the other hand, remaining battery cells 20₂, 20s, 20₄, 20s, 20₆, 20₇, 20₈, 20₉, 20₁₀, and 20₁₁, i.e., from the second battery cell 20₂ to the eleventh battery cell 20₁₁ are disposed between the neighboring battery cells 20₂, 20s, 20₄, 20s, 20₆, 20₇, 20₈, 20₉, 20₁₀, and 20₁₁ at a second distance d₂ and a tenth distance d₁₀ having a second size.

In the present embodiment, the first distance d₁ and the eleventh distance d₁₁ have a same size and the second distance d₂ to the tenth distance d₁₀ have a same size, while a size of the first distance d₁ and the eleventh distance d₁₁ may be greater than a size of the second distance d₂ to the tenth distance d₁₀.

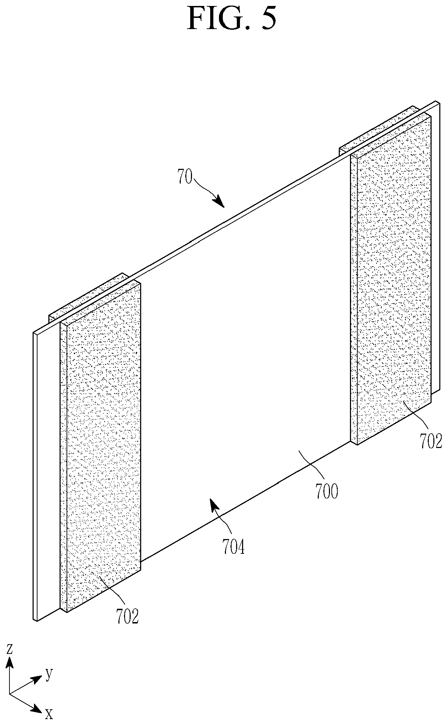

FIG. 5 illustrates a perspective view of an insulating assembly 70 according to an embodiment of the present disclosure.

As illustrated in FIG. 5, the insulating assembly 70 includes an insulation sheet 700 having an arbitrary size and shape and an adhesive tape 702 for attaching the insulating sheet 700 to the case 202 of each battery cell 20.

In the present embodiment, the insulating sheet 700 is made of a material with excellent insulation and thermal insulation, e.g., a material containing muscotive or aerogel to have a rectangular shape with a size substantially equal to or equal to the size of the wide surface 2020 of the case 202 of the battery cell 20.

On the other hand, the adhesive tape 702 is, e.g., a double-sided tape, has a size smaller than that of the insulating sheet 700, and is provided on opposite surfaces of the insulating sheet 700. For example, the adhesive tape 702 is positioned around opposite end portions of the insulating sheet 700 along a direction z perpendicular to a longitudinal direction y of the insulating sheet 700.

Accordingly, two adhesive tapes 702 may be positioned on opposite surfaces of the insulating sheet 700, respectively, and an air layer 704 may be positioned between the adhesive tapes 702 on the insulating sheet 700 due to a thickness of the adhesive tapes 702.

The insulating assembly 70 of this configuration is positioned between the battery cells 20, and in this embodiment, the insulating assembly 70 also has a thickness corresponding to a distance between the battery cells 20 described above. Herein, the thickness of the insulating assembly 70 refers to a total sum of a thickness of the insulating sheet 700 and a thickness of both adhesive tapes 702 respectively positioned on opposite surfaces of the insulating sheet 700.

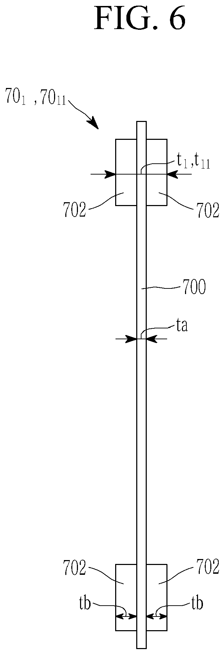

For example, a first insulating assembly 70₁ positioned between the first battery cell 20₁, which is an outermost battery cell, and the second battery cell 20₂ adjacent thereto and an eleventh insulating assembly 70₁₁ positioned between the twelfth battery cell 20₁₂, which is an outermost battery cell, and the eleventh battery cell 20n adjacent thereto, as illustrated in FIG. 6, may be configured by respectively providing first and second adhesive tapes 7020 and 7022 each having a thickness t_{b} greater than a thickness tₐ of a first insulating sheet 7001 on opposite surfaces of the first insulating sheet 7001 having the thickness tₐ. Accordingly, a thickness t₁ of the first insulating assembly 70₁ and a thickness t₁₁ of the eleventh insulating assembly 70₁₁ may be the same.

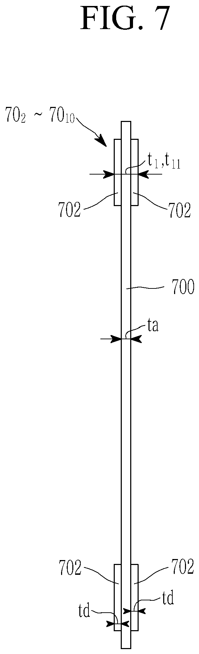

On the other hand, the second to tenth insulating assemblies 70₂ to 70₁₀ positioned between remaining battery cells 20₂, 20₃, 20₄, 20s, 20₆, 20₇, 20₈, 20₉, 20₁₀, and 20₁₁ except for the outermost battery cells 20₁ and 20₁₂, as illustrated in FIG. 7, may be configured by respectively providing third and fourth adhesive tapes 7024 and 7026 each having a thickness t_{d} smaller than a thickness t_{c} of a second insulating sheet 7003 on opposite surfaces of the second insulating sheet 7003 having the thickness t_{c}, for example. That is, the second insulating assembly 70₂ to the tenth insulating assembly 70₁₀ may have same thicknesses t₂ to t₁₀.

Accordingly, the thickness t₁ of the first insulating assembly 70₁ and the thickness t₁₁ of the eleventh insulating assembly 70₁₁ may be greater than the thicknesses t₂ to t₁₀ of the second insulating assembly 70₂ to the tenth insulating assembly 70₁₀.

For example, when applied to an electric vehicle to provide the power necessary to drive the electric vehicle, even if swelling occurs in the battery cell 20, the rechargeable battery module 1 including the stack 30 configured in this way may minimize an amount of deformation of the rechargeable battery module 1.

Herein, the amount of deformation may indicate a sum of a degree to which both end plates 50 are deformed due to the swinging phenomenon of the battery cell 20 with respect to a length L (see FIG. 4) of the stack 30 along the first direction x provided as a fixed value,

In a rechargeable battery module in which battery cells are arranged in a row, the swelling phenomenon of the battery cells occurs more in the battery cells arranged in a periphery than in a center of the stack. That is, the battery cells positioned at the periphery of the stack may further expand to an outside of the stack.

Accordingly, the rechargeable battery module is pushed to the outside of the stack due to expansion of the battery cells positioned on the periphery of the stack, causing deformation, and in this case, in the secondary battery module 1 according to the present embodiment, the distances d₁ and d₁₁ between the outermost battery cells 20₁ and 20₁₂ positioned at the periphery, that is, opposite ends, of the stack 30 and the battery cells 20₂ and 20₁₁ adjacent thereto are greater than the distances d₂ to d₁₀ between other battery cells 20₂ to 20n, and thus even if the battery cells positioned on the periphery of the stack 30 expand due to a swelling phenomenon, the above-described distances d₁ and d₁₁ may act as a free space to absorb the expansion.

Accordingly, the rechargeable battery module 1 according to the present embodiment may reduce the amount of deformation.

Table 1 below shows a comparison of the rechargeable battery module 1 according to a first example, including a stack of battery cells 30 having d₁ to d₁₁ and an insulating assembly 70 having t₁ to t₁₁ of the above configuration and a rechargeable battery module according to a comparative example. Through Table 1, it was found that the rechargeable battery module 1 according to the first example was able to reduce the amount of deformation of the rechargeable battery module compared to the comparative example in which the distances of the battery cells was uniformly uniform.

In Table 1, tₒ refers to a thickness with which an adhesive tape of an insulating assembly is pressed against a wide surface of the case of the battery cells after the rechargeable battery module 1 is manufactured. That is, before the insulation assembly is positioned between the battery cells, a thickness of the adhesive tape of the insulating assembly is maintained at 0.25 mm (t_{b} in the first example t₁ and t₁₁), 014 mm (t_{b} in the first example t₂ to t₁₀) and 0.2 mm (t_{b} in the comparative example t₁ to t₁₁), but after being sandwiched between battery cells to form a rechargeable battery module, a thickness of an insulating tape is pressed against the wide surface of the case of the battery cells by tₒ (0.11 mm) to be maintained at 0.14 mm (t_{b} in the first example t₁ and t₁₁), 0.03 mn (t_{b} in the first example t₂ to t₁₀) and 0.09 mm (t_{b} in the comparative example t₁ to t₁₁).

In addition, in the first example, there is no distance between the outermost battery cells 20₁ and 20₁₂ of the stack 30 and the end plate, but, if necessary, an appropriate distance may be set therebetween.

**(Table 1)**

| | First Example | | Comparative Example | |
|---|---|---|---|---|
| d₁, d₁₁ (mm) | 0.43 | | 0.33 | |
| d₂-d₁₀ (mm) | 0.21 | | 0.33 | |
| t₁, t₁₁ (mm) | t_{b} | 0.25 | t_{b} | 0.2 |
| | tₐ | 0.15 | tₐ | 0.15 |
| | t_{b} | 0.25 | t_{b} | 0.2 |
| t₂-t₁₀ (mm) | t_{d} | 0.14 | t_{d} | 0.2 |
| | t_{c} | 0.15 | t_{d} | 0.15 |
| | t_{d} | 0.14 | t_{d} | 0.2 |
| t₀ (mm) | 0.11 | | 0.11 | |
| Deformation amount (mm) | 3.98 | | 4.27 | |

In the first example, among the battery cells constituting the stack 30, the distance between the outermost battery cell and its neighboring battery cell is greater than the distance between other battery cells, but the present disclosure is not necessarily limited thereto.

According to the present disclosure, as illustrated in Table 2, in a case where a distance between battery cells gradually increases from the center of the stack to the periphery (Example 3), or in a case where a number of distances equal to a distance between the outermost battery cell positioned at the periphery of the stack and the battery cell adjacent to the outermost battery cell is n, and a number of distances equal to the distances between battery cells arranged adjacent to a center O of the stack is m, this may also be achieved when n > m (Example 4, n = 4, m = 2). Example 2 is the same as Example 1.

**(Table 2)**

| | d₁,d₁₁ (mm) | d₂,d₁₀ (mm) | d₃,d₉ (mm) | d₄,d₈ (mm) | d₅,d₇ (mm) | d₆ (mm) |
|---|---|---|---|---|---|---|
| Example 2 | 2.05 | 0.40 | 0.40 | 0.40 | 0.40 | 0.40 |
| Example 3 | 1.05 | 0.80 | 0.70 | 0.60 | 0.50 | 0.40 |
| Example 4 | 0.80 | 0.80 | 0.80 | 0.80 | 0.40 | 0.40 |

While this disclosure has been described in connection with what is presently considered to be practical embodiments, it is to be understood that the invention is not limited to the disclosed embodiments, but, on the contrary, is intended to cover various modifications and equivalent arrangements included within the spirit and scope of the appended claims.

### <Description of Symbols>

1: rechargeable battery module
20: battery cell
30: stack
40: side plate
50: end plate
70: insulating assembly

## Claims

1. A rechargeable battery module comprising:
a stack comprising a plurality of battery cells arranged along a first direction;
a plurality of insulating assemblies positioned between the battery cells;
a side plate positioned at a first end portion of the stack along a first direction and a second end portion opposite to the first end portion to support the unit cells; and
an end plate positioned at a third end portion of the stack and a fourth end portion opposite to the third end portion along a second direction crossing the first direction to support the unit cells,
wherein the stack is positioned in a space surrounded by the side plate and the end plate, and
a distance between at least the outermost battery cell disposed on the periphery of the stack and the battery cell adjacent to the outermost battery cell among the battery cells is at least greater than a distance between battery cells positioned adjacent to the center of the stack.

2. The rechargeable battery module as claimed in claim 1, wherein
a distance between remaining battery cells is the same except for the distance between the outermost battery cell and the battery cells neighboring the outermost battery cell.

3. The rechargeable battery module as claimed in claim 1, wherein
the distance between the battery cells gradually increases from a center of the stack to a periphery of the stack.

4. The rechargeable battery module as claimed in claim 1, wherein
if a number of distances equal to the distance between the outermost battery cell positioned at the periphery of the stack and the battery cell adjacent to the outermost battery cell is n, and a number of distances equal to the distance between battery cells positioned adjacent to the center of the stack is m among distances between the battery cells, n > m.

5. The rechargeable battery module as claimed in any one of claims 1 to claim 4, wherein
a thickness of an insulating assembly positioned between at least the outermost battery cell positioned on the periphery of the stack and a battery cell adjacent to the outermost battery cell is at least greater than a thickness of an insulation assembly positioned between battery cells positioned adjacent to the center of the stack among the insulating assemblies.

6. The rechargeable battery module as claimed in claim 1, wherein
the battery cell is a prismatic battery cell.

7. The rechargeable battery module as claimed in claim 6, wherein
the battery cell comprises a case including opposing wide surfaces and opposing narrow surfaces perpendicular to the wide surfaces, and
wherein the insulation assembly
an insulating sheet configured to have a size substantially equal to the size of the wide surface; and
an adhesive tape positioned between the insulating sheet and the wide surface to attach the insulating sheet to the case.

8. The rechargeable battery module as claimed in claim 7, wherein
the adhesive tape is separated from the insulating sheet with an air layer provided therebetween.

9. The rechargeable battery module as claimed in claim 1, wherein
the rechargeable battery module further comprises a fixing assembly that is connected to and fixed to the side plate and the end plate.

10. A rechargeable battery module comprising:
a stack comprising a plurality of battery cells arranged along a first direction;
a plurality of insulating assemblies positioned between the battery cells;
a side plate positioned at a first end portion of the stack along a first direction and a second end portion opposite to the first end portion to support the unit cells;
an end plate positioned at a third end portion of the stack and a fourth end portion opposite to the third end portion along a second direction crossing the first direction to support the unit cells; and
a fixed assembly connected and fixed to the side plate and the end plate,
the stack is positioned in a space surrounded by the side plate and the end plate,
a distance between at least the outermost battery cell disposed on the periphery of the stack and the battery cell adjacent to the outermost battery cell among the battery cells is at least greater than a distance between battery cells positioned adjacent to the center of the stack, and
a thickness of an insulating assembly positioned between at least the outermost battery cell positioned on the periphery of the stack and a battery cell adjacent to the outermost battery cell is at least greater than a thickness of an insulation assembly positioned between battery cells positioned adjacent to the center of the stack among the insulating assemblies.
